# EUROPEAN PATENT APPLICATION

(11) **EP 1 942 398 A1**
(43) Date of publication of application: **09.07.2008**
(21) Application number: 06812027.8
(22) Date of filing: 19.10.2006
(51) Int. Cl.: G06F 3/02, G06F 1/00, G06F 3/041, H04M 1/665

(54) **INPUT DEVICE FOR INPUTTING PASSWORD OR THE LIKE AND MOBILE TELEPHONE HAVING THE INPUT DEVICE**

(30) Priority: 21.10.2005 JP 2005306785; 25.10.2005 JP 2005310036
(71) Applicant: Sanyo Electric Co., Ltd., Osaka 570-8677 (JP); Tottori Sanyo Electric Co., Ltd., Tottori-shi, Tottori 680-8634 (JP)
(72) Inventor: YAMASHITA, Takahiro, Tottori-shi, Tottori 6808634 (JP); YAMASHITA, Yukari, Tottori-shi, Tottori 6808634 (JP); KAWAGUCHI, Mitsuhisa, Tottori-shi, Tottori 6808634 (JP); SATO, Takahiro, Tottori-shi, Tottori 6808634 (JP); TAIRA, Katsunobu, Tottori-shi, Tottori 6808634 (JP)
(74) Representative: HOFFMANN EITLE
(86) International application number: PCT/JP2006/320849
(87) International publication number: WO 2007/046466

(57) **Abstract**

A contact sensor capable of inputting a character by tracing a character with user's finger is arranged in a region of a ten-key unit of a mobile telephone. When registering a password to release a key lock, a user traces a shape of a line, a character, a number, or other symbol on the contact sensor with his/her finger so that the shape is inputted and stored in a memory, thereby completing registration of a password. When releasing the key lock, the user traces the registered shape on the contact sensor with his/her finger so that the key lock is released. The input is easy. Even if the password input operation is observed by a third person, the password will not be easily known to the third person.

## Description

### [Technical Field]

The present invention relates to an input device for inputting a password or the like and a mobile telephone having the input device, more particularly, the present invention relates to a mobile telephone having a contact sensor arranged on the surface of an operation unit.

### [Related Art]

At automated-teller machines (ATMs) placed in banks and the like, normally after a card is inserted, cash is withdrawn by entering a password. When a password is entered, however, the password is easily known to another person by being watched from side or behind.

To avoid such a thing, various technologies have been proposed, for example, in the following Patent Document 1 (JP-A-2000-99801), a technology for randomly changing a key position of each numeral character on a numeric keypad is disclosed.

The technology disclosed in Patent Document 1 includes a display/input device which displays a password input screen with touch panels superposed, and to which predetermined information is entered by an operator touching the touch panel, and ten-key control means for randomly changing the key position of each numeral character on a numeric keypad displayed on the above-mentioned password input screen. In this way, because the position of each numeral key on the numeric keypad is changed at random, even if a third person observes the action of the operator, a password cannot be easily known.
[Patent Document 1]
JP-A-2000-99801 (Fig. 1)

### [Disclosure of the Invention]

### [Problems to be Solved by the Invention]

Even if the technology such as in Patent Document 1 mentioned above is used, however, there is a problem that another person is able to know which number is pressed by watching a number displayed on the panel when a user enters a password.

Similarly, when a key lock function of a mobile telephone is released, there is a problem that another person can see the pressing operation of a key lock number and is able to know the key lock number.

In view of the above-mentioned problems, it is an object of the present invention to provide an input device for inputting a password or the like without allowing a third person to easily know the password or the like that a user inputs and a mobile telephone having the input device.

### [Means to Solve the Problems]

To solve the above-mentioned problems,an invention according to claim 1 of the present invention is an input device for inputting a password including: a contact sensor; storage means for storing a shape traced on the contact sensor; disabling means for disabling an execution of a particular function; and control means for clearing the particular function from the disabled state thereof, upon determining, with a particular function disabled by the disabling means that the same shape as the shape stored in the storage means is inputted from the content sensor.

The invention according to claim 2 of the invention, in accordance with the invention of claim 1, is arranged such that the shape traced on the contact sensor is a shape continuously traced with a finger on the contact sensor without lifting the finger throughout, the storage means stores the shape, and upon determining, with a particular function disabled by the disabling means, that the same shape as the shape stored in the storage means is inputted from the content sensor, the control means clears the particular function from the disabled state thereof.

The invention according to claim 3 of the invention, in accordance with the invention of claim 1 or 2, is arranged such that the input device further includes number determination means for determining a number, and in the state where the disabling means disables an execution of a particular function, the control means clears the particular function from the disabled state thereof, when the number determination means determines a number based on a shape traced on the contact sensor and a number that is the same as the determined number is stored in the storage means.

The invention according to claim 4 of the invention, in accordance with the invention of claim 1 or 2, is arranged such that the input device further includes character determination means for determining a character, and in the state where the disabling means disables an execution of a particular function, when the character determination means determines a character based on a shape traced on the contact sensor and a character that is the same as the determined character is stored in the storage means, the control means clears the particular function from the disabled state thereof.

The invention according to claim 5 of the invention, in accordance with the invention of claim 1 or 2, is arranged such that the input device further includes symbol determination means for determining a symbol, and in the state where the disabling means disables an execution of a particular function, when the symbol determination means determines a symbol based on a shape traced on the contact sensor and a symbol that is the same as the determined symbol is stored in the storage means, the control means clears the particular function from the disabled state thereof.

An invention according to claim 6 of the invention is a mobile telephone having an input device including: a contact sensor; storage means for storing a traced shape on the contact sensor; disabling means for disabling an execution of a particular function; and control means for clearing the particular function from the disabled state thereof, upon determining, with a particular function disabled by the disabling means, that the same shape as the shape stored in the storage means is inputted from the content sensor.

The invention according to claim 7 of the invention, in accordance with the invention of claim 6, is arranged such that the shape traced on the contact sensor is a shape continuously traced with a finger on the contact sensor without lifting the finger throughout, the storage means stores the shape, and upon determining, with a particular function disabled by the disabling means, that the same shape as the shape stored in the storage means is inputted from the content sensor, the control means clears the particular function from the disabled state thereof.

The invention according to claim 8 of the invention, in accordance with the invention of claim 6 or 7, is arranged such that the disabling means for disabling an execution of a particular function is key-operation disabling means for disabling a key operation, and upon determining, with a key operation disabled by the key-operation disabling means, that the same shape as the shape stored in the storage means is inputted from the content sensor, the control means clears the key operation from the disabled state thereof made by the key-operation disabling means.

### [Effects of the Invention]

In accordance with the invention of claim 1, a user releases the execution prohibition of a particular function by tracing on a contact sensor. Thus, in comparison with a password inputted with a conventional numeric keypad, a password can be easily inputted. In addition, it is possible to avoid that a password is easily known to another person.

In accordance with the invention of claim 2, a user can release the execution prohibition of a particular function only by tracing on the contact sensor. Thus, in comparison with a password input with a conventional numeric keypad, a password can be easily inputted. In addition, in inputting one password, there will be fewer input mistakes by tracing continuously without lifting a finger throughout from the contact sensor than by touching the contact sensor twice or more with the finger.

In accordance with the invention of claim 3 or 6, as a shape to be traced by a user on the contact sensor, any number, character, or symbol can be used.

In accordance with the invention of claim 6, a user can release the execution prohibition of a particular function only by tracing on the contact sensor. Thus, in comparison with a password input with a conventional numeric keypad, a password can be easily inputted. More particularly, in the case that a key lock function is used with a mobile telephone, it is possible to achieve such an advantage that the key lock can be promptly released when telephone conversation, phone directory browsing, mail function or the like is performed.

In accordance with the invention of claim 7, a user can release the execution prohibition of a particular function only by tracing on the contact sensor, in comparison with a password input with a conventional numeric keypad, a password can be easily inputted. In addition, in inputting one password, there will be fewer input mistakes by tracing continuously without lifting a finger throughout from the contact-sensor than by touching the contact sensor twice or more with the finger.

In accordance with the invention of claim 8, in the case that a key lock function is used with a mobile telephone, it is possible to achieve such an advantage that the key lock can be promptly released when telephone conversation, telephone directory browsing, mail function or the like is performed.

### [Brief Description of Drawings]

[Fig. 1] Fig. 1 is a perspective view of an embodiment device, to which the present invention is applied.
[Fig. 2] Fig. 2 is a perspective view showing a use form of the embodiment device, to which the present invention is applied.
[Fig. 3] Fig. 3 is a block diagram of the embodiment device, to which the present invention is applied.
[Fig. 4] Fig. 4 is a cross section view showing the vicinity of a contact sensor 56.
[Fig. 5] Fig. 5 is a diagram showing an example of a display form of the embodiment device, to which the present invention is applied.
[Fig. 6] Fig. 6 is a flow chart showing operations of the embodiment device, to which the present invention is applied.
[Fig. 7] Fig. 7 is a conceptual diagram explaining a concept of matching determination of an inputted shape, in which Fig. 7A is a diagram showing a content of a buffer storing a shape inputted first, and Fig. 7B is a diagram schematically showing a content of a buffer storing a shape inputted again. [Fig. 8] Fig. 8 is a flow chart showing operations of the embodiment device, to which the present invention is applied.
[Fig. 9] Fig. 9 is a diagram showing another example of the display form of the embodiment device, to which the present invention is applied.

### [Explanation of Letters or Numerals]

- 10: Mobile telephone
- 36: Control circuit
- 40: ROM
- 44: Input unit
- 48: Ten-key unit
- 56: Contact sensor
- 71: First buffer
- 72: Second buffer

### [Best Mode(s) for Carrying Out the Invention]

A mobile telephone according to an embodiment of the invention is described with the reference to the drawings.

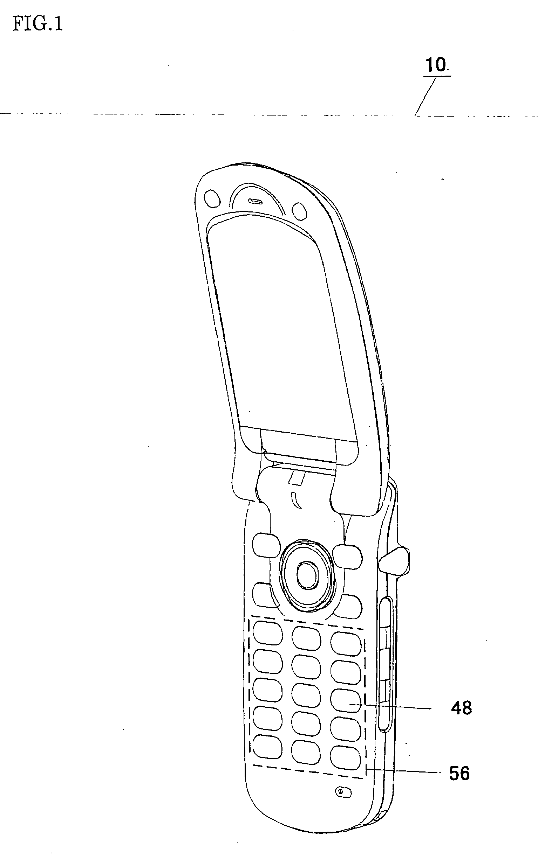

Fig. 1 is a perspective view of a mobile telephone which is an embodiment device of the present invention. The mobile telephone according to the present embodiment has a contact sensor 56 capable of being operated by user's touching with a finger besides a normal key operating unit such as a ten-key unit 48. In addition, the above-mentioned contact sensor 56 is arranged on the ten-key unit 48 and in a region around the ten-key unit 48.

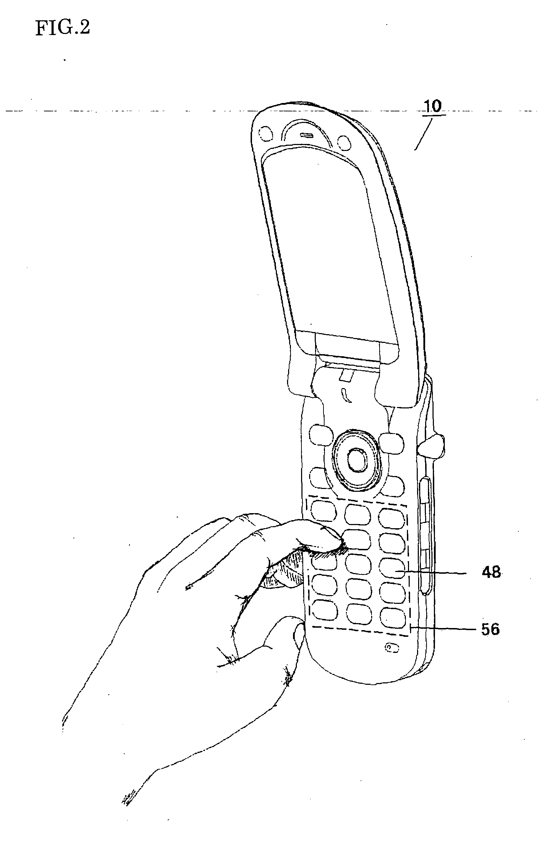

Fig. 2 is a perspective view showing a use form of the present embodiment. A user can perform input operation by tracing with a user's finger on the ten-key unit 48 and the contact sensor 56 (a part surrounded in a dotted line of Fig. 2) arranged around the ten-key unit 48.

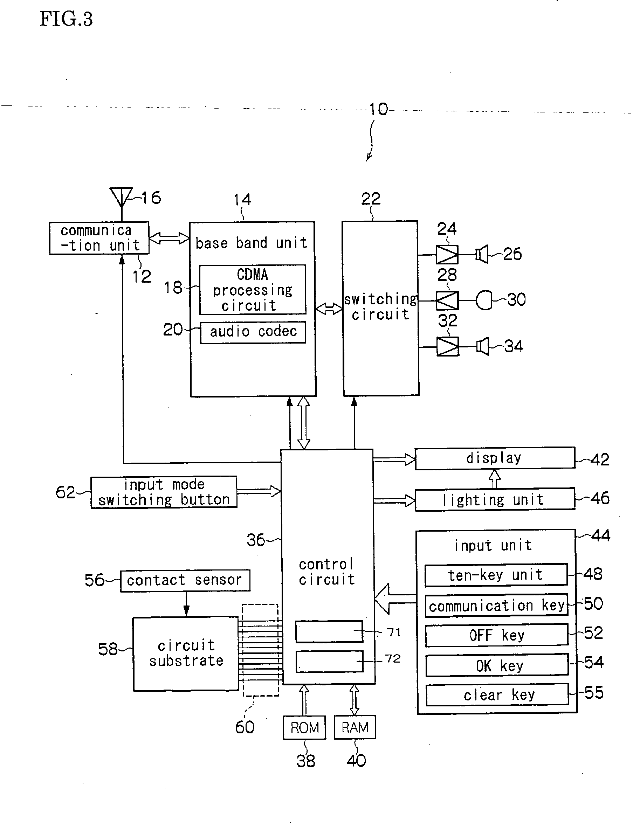

As shown in Fig. 3, a mobile telephone 10 has a communication unit 12 connected to an antenna 16. The communication unit 12 sends a signal from a base band unit 14 (described later) to a base station via the antenna 16, and receives electric wave from the base station via the antenna 16.

In addition, the communication unit 12 is connected to the base band unit 14. The base band unit 14 has a CDMA processing circuit 18 and an audio codec 20. Here, the CDMA processing circuit 18 performs code division multiple access, scramble, an error control, and timing detection. In addition, the audio codec 20 compresses (encodes) and expands (decodes) voice, performs an analog-to-digital conversion, and changes received sound volume and a sensitivity of the microphone by an internal amplifier circuit (not shown).

Additionally, a switching circuit 22 is connected to the base band unit 14. The switching circuit 22 is connected to a first speaker 26 via an amplifier circuit 24. The first speaker 26 converts the electric signal of the base band unit 14 amplified in the amplifier circuit 24 into voice. The first speaker 26 is attached to a user's ear at the time of use in telephone conversation.

Moreover, a microphone 30 is connected to the switching circuit 22 via an amplifier circuit 28. The microphone 30 is used for telephone conversation, and converts voice into an electric signal. The electric signal output from the microphone 30 is amplified in the amplifier circuit 28, and is output to the base band unit 14.

Further, the switching circuit 22 is connected to a second speaker 34 via an amplifier circuit 32. The second speaker 34 converts the electric signal of the base band unit 14 amplified in the amplifier circuit 32 into voice. The second speaker 34 is a speaker for loudspeaking to allow surrounding people to listen to received voice. In addition, the second speaker 34 performs a ringing operation to report an incoming call. Note that, these three amplifier circuits 24, 28, and 32 each have a fixed gain. Therefore, audio volume of the first speaker 26 and the second speaker 34 and the sensitivity of the microphone 30 cannot be changed.

The switching circuit 22 switches whether a connection with the base band unit 14 is to the amplifier circuit 24 for the first speaker 26 and the amplifier circuit 28 for the microphone 30, or to the amplifier circuit 32 for the second speaker 34 for loudspeaking and the amplifier circuit 28 for the microphone 30.

In addition, the communication unit 12, the base band unit 14, and the switching circuit 22 are connected to the control circuit (the control unit) 36. The switch by the switching circuit 22 stated above is performed by a control of the control circuit 36. In addition, the audio codec 20 of the base band unit 14 is controlled by the control circuit 36, and audio volume of the first speaker 26 and the second speaker 34 and the sensitivity of the microphone 30 are changed by the audio codec 20. The control circuit 36 is connected to a ROM 38, and each part is controlled based on a system program stored in the ROM 38.

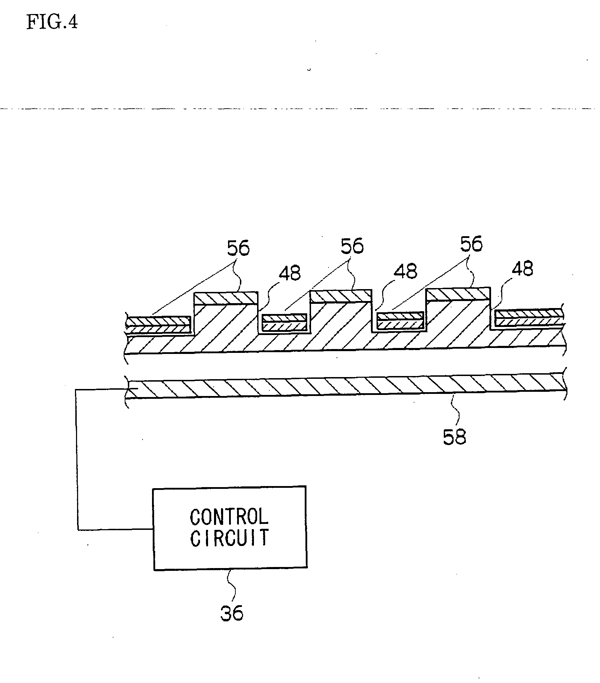

Additionally, the control circuit 36 is connected to an input unit 44. The input unit 44 includes the ten-key unit 48 for inputting a phone number and the like, a communication key 50 for operating a start of a telephone conversation, an OFF key 52 for operating an end of a telephone conversation, an OK key 54, and a clear key 55. Here, the ten-key unit 48 includes input buttons 0 through 9, a # button, and a * button (12 buttons altogether in the present embodiment). Additionally, as shown in Fig. 4, on the entire surface of the ten-key unit 48, and on the surface of the case around the ten-key unit 48, the contact sensor 56 for detecting a user's touch is provided.

The contact sensor 56 is a conventionally known sensor, for which, for example, a transparent electrode is used. The contact sensor 56 is electrically connected with a wiring pattern formed in a circuit substrate 58 (not shown), and furthermore, the circuit substrate 58 is electrically connected to the control circuit 36. On this account, a signal which shows that a user touches the contact sensor 56 is inputted into the control circuit 36 via the contact sensor 56 and the circuit substrate 58.
It is noted that, in the embodiment device, the contact sensor 56 is arranged on the surface of the case, but it may be arranged inside the case such as a rear side of the case and the keys 48. For example, any capacitance-detecting type contact sensor can be arranged inside the case.

In addition, the control circuit 36 is connected to a lighting unit 46 having predetermined colored LED elements. By the emission from the LED elements of the lighting unit 46, a display (an illumination unit) 42 becomes the predetermined colors.

In a RAM 40, four-digit password data is stored.

Within the control circuit 36 are provided a first buffer 71 and a second buffer 72 that temporarily store a password inputted from the contact sensor 56. The detailed operation is explained below.

The embodiment device has the structure explained above. In the next place, an operation in an embodiment of a mobile telephone structured as shown in Fig. 3 is described below. Subsequently, a mobile telephone in an embodiment of the invention is described with the reference to the drawings.

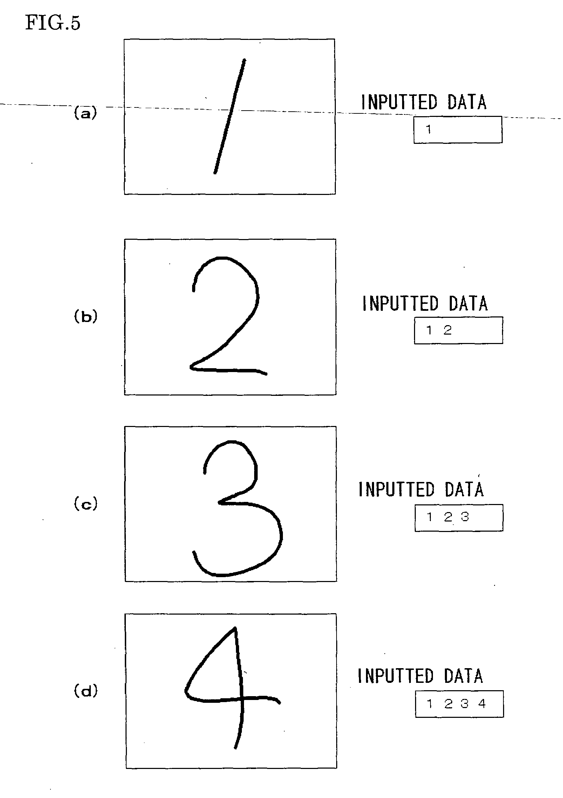

In the present embodiment, a user can perform an on (or off) operation of a key lock by inputting a four digit password with the contact sensor 56. For example, Fig. 5 is a diagram showing a use form of the contact sensor 56, and as shown in Fig. 5, the input of a password (e.g., 1234) is performed by a user's tracing on the contact sensor 56.

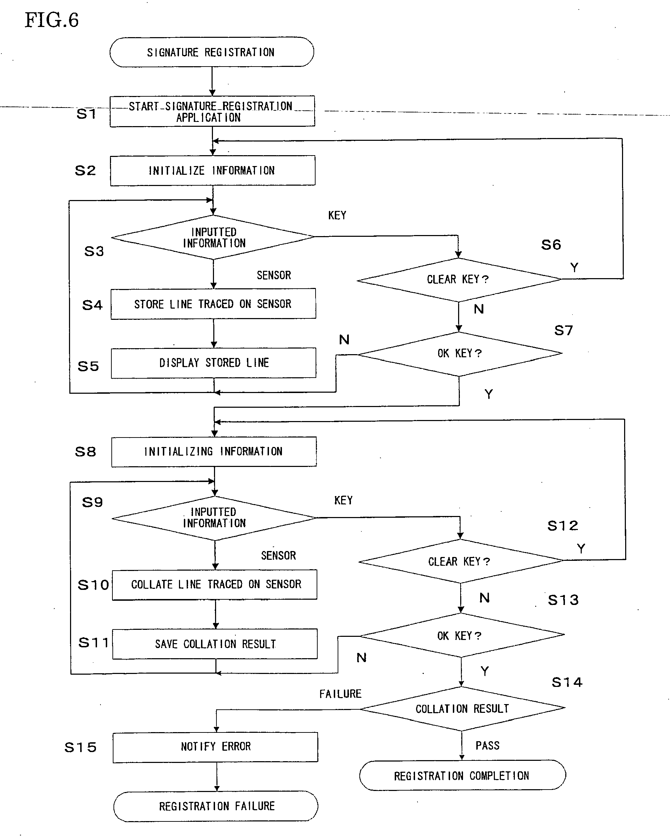

Next, a registering operation of a password is described. Fig. 6 is a flow chart showing an operation in registering a password.

In step S1 of Fig. 6, when the control circuit 36 determines that the input unit 44 instructs to start a registration operation of a password, the process proceeds to step S2.

In step S2, the control circuit 36 performs initializing information. For example, the first buffer 71 mounted in the control circuit 36 is cleared, and the process proceeds to step S3.

In step S3, if the control circuit 36 determines that there is an operation of the input unit 44, the process proceeds to step S6, and if the control circuit 36 determines that there is an input operation from the contact sensor 56, and the process proceeds to step S4.

In step S4, a shape (e.g., shape of a line or number) traced on the contact sensor 56 by a user is stored temporarily in the first buffer 71 of the control circuit 36. To be concrete, based on the signal inputted from the contact sensor 56 via the circuit substrate 58, when the control circuit 36 determines, for example, that number "1" as shown in Fig. 5A is traced, it stores shape data of the character "1" in the first buffer 71 of the control circuit 36.
In the following step S5, the control circuit 36 displays the shape (e.g., a number) stored in the step S4 on the display 42, successively the registration of one-digit shape is completed by a key operation of a user, and then the process returns to step S3.

Every time steps S3 through S5 are repeated in this way, as shown in Figs. 5A through 5D, one-digit shape data (e.g., shape of a line or number) is inputted and at the same time each one digit is switched and displayed on the display 42. Furthermore, the inputted shape data (e.g., shape of a line or number) is stored in the first buffer 71. Therefore, when steps S3 through S5 are repeated four times, data of four shapes (for example, a four digit password) is stored in the first buffer 71.

In step S6, if the control circuit 36 determines that the clear key 55 is entered from the input unit 44, the process returns to step S2. Otherwise, the process proceeds to step S7.

In step S7, if the control circuit 36 determines that there is a press of the OK key 54, the process proceeds to step S8, and otherwise, the process returns to step S3.

In addition, in steps S3, and S6 through S7, an arrangement for detecting the ten-key unit may be adopted.

As described above, by repeating steps S1 through S7 (by user's tracing on the contact sensor 56 four times), four digit shape data (e.g., shape of a line or number) is stored temporarily in the first buffer 71.

In step S8, the control circuit 36 performs initializing information. For example, the second buffer 72 mounted in the control circuit 36 is cleared, and the process proceeds to step S9.

In step S9, if the control circuit 36 determines that there is an operation of the input unit 44, the process proceeds to step S12. If the control circuit 36 determines that there is an input operation from the contact sensor 56, the process proceeds to step S10.

In step S10, the shape data traced on the contact sensor 56 by a user is temporarily stored in the second buffer 72 of the control circuit 36, and is collated with the data of the shape stored in the first buffer 72 in steps S1 through S7. Specifically, based on the signal inputted from the contact sensor 56 via the circuit substrate 58, when the control circuit 36 determines, for example, that number "1" as shown in Fig. 5A is traced, the shape data of the character "1" is stored in the second buffer 72 of the control circuit 36, and is collated with the data of the shape stored in the first buffer 71.

In the following step S11, the control circuit 36 stores the collated result data in the step S10 in the second buffer 72, and the process proceeds to step S9.

In this way, in steps S9 through S11, as shown in Fig. 5A through 5D, for example, when each time a digit of a password is inputted, the digit is collated one by one with the data of the shape stored in the first buffer 71 (collated with the data of the inputted shape in steps S3 through S5). Additionally, the collation result is stored in the second buffer 72.

In step S12, if the control circuit 36 determines that the clear key 55 is entered from the input unit 44, the process returns to step S8, and otherwise the process proceeds to step S13.

In step S13, if the control circuit 36 determines that there is a press of the OK key 54, the process proceeds to step S14, and otherwise the process returns to step S9.

In step S14, if the control circuit 36 determines that four digits of the collation result which is stored in the second buffer 72 (the collation result stored in steps S9 through S11) are in agreement for all of them, it stores the four digit password in the ROM 38, and completes the registration of the password. On the contrary, if the control circuit 36 determines that even one digit is mismatched, an error is displayed on the display 42 and the processing is finished as a registration failure.

In this manner, in the registration operation for a password of the present embodiment, in steps S1 through S7, when the shapes of four digits are inputted by tracing on the contact sensor 56 by a user, the shape data is stored temporarily in the first buffer 71. Successively in steps S8 through S15, when the shapes of the four digits are inputted by tracing on the contact sensor 56 again by the user, the shape data is stored temporarily in the second buffer 72. Then, the shape data stored in the first buffer 71 is collated with the shape data stored in the second buffer 72.

As a result of the collation, when all the four digits agree, the shape data stored in the first buffer 72 (or the second buffer 72) is stored in the rewritable ROM 38 which is storage means, and the registration is completed. In this way, by inputting the same shape (e.g., a password) twice, it is possible to confirm whether the password that is inputted once is correctly recognized as a character. If the same password is inputted twice, and is not recognized as the same number, because the password is a number which is hard to be recognized by a mobile telephone (e.g., 5 and 6), a user can register another number that is easily recognized as a password.

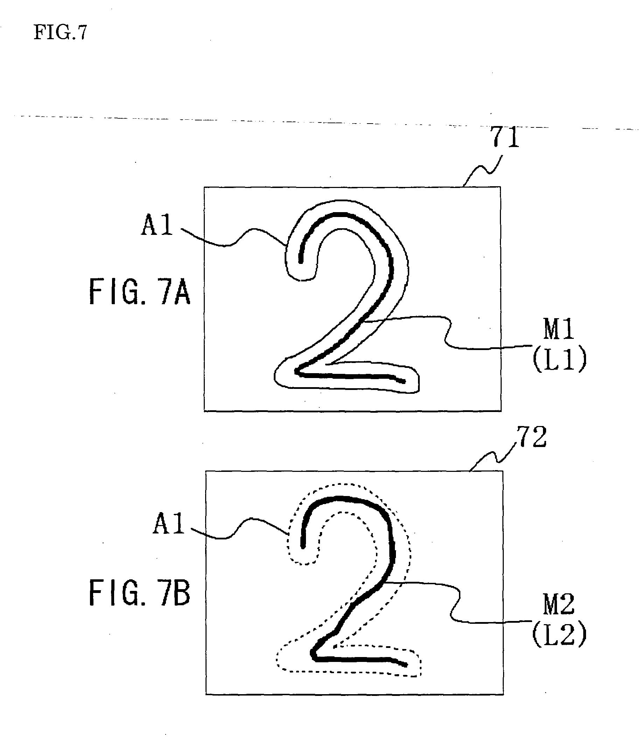

Here, the collation of the shape stored in the first buffer 71 at the time of the registration with the shape stored in the second buffer 72 at the time of inputting can be performed as follows. That is, as shown in Fig. 7A, a margin region A1 of the predetermined width (e.g., 10% to 20% of a center line width) from a center position (a center line) L1 of the shape M1 stored in the first buffer 71 is set. Subsequently, as shown in Fig. 7B, when the center position (a center line) L2 of the inputted shape M2 that is stored in the second buffer 72 is in the margin region A1 (indicated by dotted lines), the two shapes are determined to be in agreement.

In this case, without comparing the size of the shape at the time of inputting with the size of the shape at the time of the registration as they are, they may be determined to be in agreement if they are similar in shape. In addition, a shape itself traced with a finger may be stored as the shape at the time of the registration in the first buffer 71, and an outer shape connecting the tip points of the shape traced with a finger may also be stored in the first buffer. In this case as for the shape at the time of the inputting likewise, an outer shape connecting the tip points of the inputted shape is stored in the second buffer, and the matching level is determined. In such a case also, a method for determining the matching level by determining the similarity of the outer shapes can be adopted.

Next, inputting performance of a password after putting a device in a key lock state is described below.

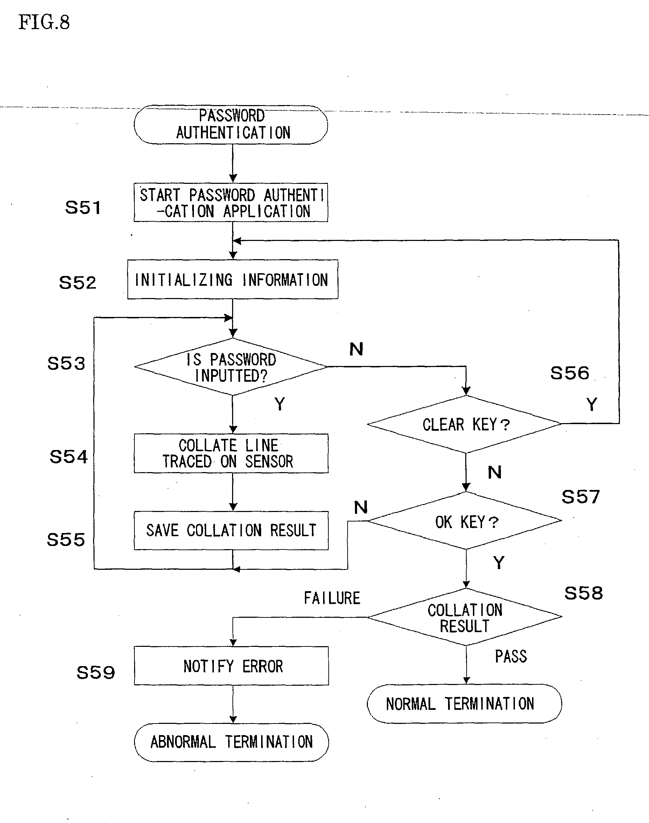

Fig. 8 is a flow chart showing performance at the time of inputting shape data (e.g., a number) for releasing the key lock.
In step S51 of Fig. 8, when the control circuit 36 determines that the input unit 44 instructs to start an inputting operation of a password for releasing the key lock, and the process proceeds to step S52.

In step S52, the control circuit 36 performs initializing information. For example, the first buffer 71 mounted in the control circuit 36 is cleared, and the process proceeds to step S53.

In step S53, if the control circuit 36 determines that there is an operation of the input unit 44, the process proceeds to step S56, and if the control circuit 36 determines that there is an input operation from the contact sensor 56, the process proceeds to step S54.

In step S54, the shape data (e.g., a number) traced on the contact sensor 56 by a user is temporarily stored in the first buffer 71 of the control circuit 36. Specifically, based on the signal inputted from the contact sensor 56 via the circuit substrate 58, when the control circuit 36 determines, for example, that number "1" as shown in Fig. 5A is traced, shape data of the character "1" is stored in the first buffer 71 of the control circuit 36, and the stored shape data and the shape data stored in the ROM 38 are compared and determined (collated) whether they are in agreement or not.

Matching determination of the inputted shape at the time of releasing the key lock and the shape stored in the ROM 38 can be the same as the above-mentioned collation of the shape stored in the first buffer 71 at the time of the registration with the shape stored in the second buffer 72 at the time of inputting.

In the following step S55, the control circuit 36 stores the collation result determined in the step S54 mentioned above in the first buffer 71, and the process returns to step S53.

In step S56, if the control circuit 36 determines that the clear key 55 is entered from the input unit 44, the process returns to step S52, and otherwise the process proceeds to step S57.

In step S57, if the control circuit 36 determines that there is a press of the OK key 54, the process proceeds to step S58, and otherwise the process returns to step S53.

In step S58, the control circuit 36 determines that four digits of the collation result which is stored in the first buffer 71 (the collation result stored in steps S53 through S55) are in agreement for all of them, then it determines that the passwords agree with each other releases the key lock, and completes the processing. On the contrary, if even one digit of the collation result is determined to be a mismatch, an error is notified in step S59, and then the processing is finished.

In this way, in the present embodiment, a password can be inputted by a user's tracing on the contact sensor 56. On this account, in comparison with a related art method for inputting a password by operating a numeric keypad, a password can be more easily inputted, and more particularly, high convenience is provided for an inexperienced user in operations of a numeric keypad. Moreover, even if the password input operation is observed by another person, because the password input operation is complicated in comparison with the ten-key unit, the correct password will not be easily known to the another person.

In addition, in the present embodiment, the traced shape which the contact sensor 56 detects is stored. The traced shape which the contact sensor 56 detects, however, may be converted into data such as an approximate character, number, or symbol, and be stored as data such as a character, a number, or a symbol. In such a configuration, when a password is inputted from the contact sensor 56, the inputted shape may be converted into data such as a character, a number or a symbol, and determined whether they are collated with the character, the number or the symbol stored beforehand. If they are in agreement, the key lock can be released.

Additionally, in the present embodiment mentioned above, information inputted with the contact sensor 56 is limited to a number, but by being entered by the operations of the ten-key unit, or by being inputted with the contact sensor 56, when the key lock is released by inputting a password, there are many cases that a user registers, for example, his or her date of birth, a license plate number of his or her vehicle, and consecutive numbers as a four digit password, which may cause the key lock to be easily released.

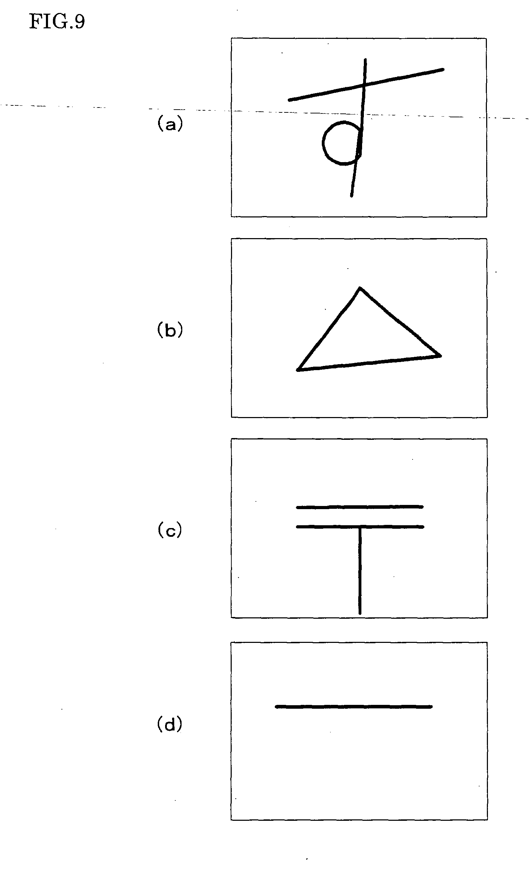

To solve such a problem, instead of a password, for example, as shown in Fig. 9, a character "su," a symbol "triangle," a graphic symbol "post office symbol," a line "horizontal bar," a dot, etc. may be registered. In such a configuration, information that should be inputted becomes more complicated, and it is possible to prevent the key lock from being easily released by another person.

Furthermore, in the present embodiment, when shapes agree with each other, the key lock is released. Even if the shape stored in the ROM 38 does not completely agree with the inputted shape, however, as noted earlier, as long as the shapes are similar or resemble each other to some extent, it may be determined that a correct password is inputted. In addition, even if the size of the inputted shape and the panel position are different, it may be determined that a correct password is inputted. Moreover, a sensor detecting contact sensing may be provided on a liquid crystal display unit.

By the way, as to the embodiment device mentioned above, an example to register a shape traced on a contact sensor with a finger as a password or the like is described. In the case of such method, data of the shape traced with a finger is saved, and if a matching shape is inputted, a disabling function is released. Thus, if a complicated shape is registered as a password, a disabling function may not be able to be released easily.

Therefore, as a password to be registered, a shape traced on the contact sensor can be a shape continuously traced (so-called one-stroke drawing shape) without lifting a finger throughout on the contact sensor. With such an arrangement as above, at the time of inputting there will be fewer input mistakes by tracing continuously without lifting a finger throughout from the contact sensor than by touching the contact sensor twice or more with the finger.

In this case, in steps S4 and S10 of the flow chart of Fig. 6, as a shape traced on the contact sensor, a shape traced continuously without lifting a finger throughout on the contact sensor may be detected and stored. In the same way, in step S54 of the flow chart of Fig. 8, a shape traced continuously without lifting a finger throughout on the contact sensor may be collated as a shape traced on the contact sensor.

It should be noted that the present invention is embodied in a mobile telephone in the embodiment, however, it can similarly be embodied also in an automatic teller machine (ATM) in banks, a personal digital assistant (PDA), and the like.

## Claims

1. An input device for inputting a password, comprising:
a contact sensor;
storage means for storing a shape traced on the contact sensor;
disabling means for disabling an execution of a particular function; and
control means for clearing the particular function from the disabled state thereof, upon determining, with a particular function disabled by the disabling means that the same shape as the shape stored in the storage means is inputted from the content sensor.

2. The input device for inputting a password according to claim 1, wherein
the shape traced on the contact sensor is a shape continuously traced with a finger on the contact sensor without lifting the finger throughout,
the storage means stores the shape, and
upon determining, with a particular function disabled by the disabling means, that the same shape as the shape stored in the storage means is inputted from the content sensor, the control means clears the particular function from the disabled state thereof.

3. The input device for inputting a password according to claim 1 or claim 2, further comprising:
number determination means for determining a number,
in the state where the disabling means disables an execution of a particular function, the control means clearing the particular function from the disabled state thereof, when the number determination means determines a number based on a shape traced on the contact sensor and a number that is the same as the determined number is stored in the storage means.

4. The input device for inputting a password according to claim 1 or claim 2, further comprising:
character determination means for determining a character,
in the state where the disabling means disables an execution of a particular function, when the character determination means determines a character based on a shape traced on the contact sensor and a character that is the same as the determined character is stored in the storage means, the control means clearing the particular function from the disabled state thereof.

5. The input device for inputting a password according to claim 1 or claim 2, further comprising:
symbol determination means for determining a symbol,
in the state where the disabling means disables an execution of a particular function, when the symbol determination means determines a symbol based on a shape traced on the contact sensor and a symbol that is the same as the determined symbol is stored in the storage means, the control means clearing the particular function from the disabled state thereof.

6. A mobile telephone having an input device for inputting a password comprising:
a contact sensor;
storage means for storing a traced shape on the contact sensor;
disabling means for disabling an execution of a particular function; and
control means for clearing the particular function from the disabled state thereof, upon determining, with a particular function disabled by the disabling means, that the same shape as the shape stored in the storage means is inputted from the content sensor.

7. The mobile telephone according to claim 6, wherein
the shape traced on the contact sensor is a shape continuously traced with a finger on the contact sensor without lifting the finger throughout, the storage means stores the shape, and
upon determining, with a particular function disabled by the disabling means, that the same shape as the shape stored in the storage means is inputted from the content sensor, the control means clears the particular function from the disabled state thereof.

8. The mobile telephone according to claim 6 or claim 7, wherein
the disabling means for disabling an execution of a particular function is key-operation disabling means for disabling a key operation, and
upon determining, with a key operation disabled by the key-operation disabling means, that the same shape as the shape stored in the storage means is inputted from the content sensor, the control means clears the key operation from the disabled state thereof made by the key-operation disabling means.
